# EUROPÄISCHE PATENTANMELDUNG

(11) **EP 0 521 364 A2**
(43) Veröffentlichungstag der Anmeldung: **07.01.1993**
(21) Anmeldenummer: 92110460.0
(22) Anmeldetag: 20.06.1992
(51) Int. Cl.: G01C 19/70, B64G 1/28, G01C 19/02

(54) **Dreiachsiger Laserkreisel**

(30) Priorität: 05.07.1991 DE 4122285
(71) Anmelder: Bodenseewerk Gerätetechnik GmbH, D-88662 Überlingen (DE)
(72) Erfinder: Neumann, Werner, W-7776 Owingen (DE)
(74) Vertreter: Wolgast, Rudolf, Dipl.-Chem. Dr.

(57) **Zusammenfassung**

Bei einem dreiachsigen Laserkreisel mit drei Ringlasern (18,20,22) und Dithermitteln (36,40) zur Erzeugung von Schwingbewegungen der Ringlaser sind die Dithermittel (36,40) zur Erzeugung einer Schwingbewegung um eine einzige Ditherachse (58) eingerichtet. Die drei Ringlaser (18,20,22) sind um 120° gegeneinander um die Ditherachse (58) winkelversetzt. Die Eingangsachsen der Ringlaser (18,20,22) bilden mit der Ditherachse (58) gleiche spitze Winkel. Die Ringlaser (18,20,22) sind auf einem gewölbeartigen Träger (10) montiert. Der Träger (10) ist von Dithermoduln (36,40) zu Schwingbewegungen um die Ditherachse (58) anregbar. Die Dithermoduln (36,40) weisen je einen Außenring (44,46) und einen dazu konzentrischen Innenring (34,38) auf, der mit dem Außenring (44,46) durch speichenartige, radiale Federn (47,48,50) verbunden ist, sowie Dither-Antriebe (52,54,56), durch welche eine Drehschwingbewegung des Innenrings (34,38) gegenüber dem Außenring (44,46) erzeugbar ist. Der Innenring (34) des einen Dithermoduls (36) ist mit dem geschlossenen Ende des gewölbeartigen Trägers (10) verbunden. Der Innenring (38) des anderen Dithermoduls (40) ist mit dem Rand des gewölbeartigen Trägers (10) verbunden. Das von dem Dithermoduln (36,38) und der Ringlaseranordnung mit Träger 10 und Ringlasern (18,20,22) gebildete bewegliche Teil ist durch Anschläge (90,92,94) in einer Ausgangslage gehalten. Unter dem Einfluß einer hohen Beschleunigung in Richtung der Ditherachse (58) und der elastischen Rückschwingung werden die Anschläge (90,92,94) bleibend verformt, so daß die Dithermoduln (36,40) dann mit der Ringlaseranordnung frei schwingen können.

## Beschreibung

Die Erfindung betrifft ein Gerät mit einem beweglichen Teil, das vorübergehend hoher Beschleunigung ausgesetzt ist, wobei das bewegliche Teil unter dem Einfluß der auftretenden Beschleunigungskräfte elastisch verformbar ist.

Es gibt Anwendungen, bei denen Sensoranordnungen extrem hohen Beschleunigungen unterworfen sind. Solche hohen Beschleunigungen treten beispielsweise auf beim Abschuß gelenkter Munition oder rückstoßgetriebener Flugkörper.

Bei manchen Sensoranordnungen sind bewegliche Teile vorgesehen. Solche Teile können sich bei solchen Beschleunigungen unter dem Einfluß der auftretenden Trägheitskräfte verformen und möglicherweise brechen. Nichtbewegliche Teile können in der Struktur des Flugkörpers in geeigneter Weise abgestützt werden. Bei beweglichen Teilen, die sich im Betrieb relativ zu der Struktur bewegen müssen, ist das nicht ohne weiteres möglich.

Ein Beispiel für solche Geräte sind Laserkreiselanordnungen.

Zur Messung der Drehrate sind Ringlaser bekannt. Bei solchen Ringlasern bildet der Resonanzhohlraum einen geschlossenen Ring. Es wird Laserlicht erzeugt, das "linksherum" in dem Ring umläuft, und Laserlicht, das "rechtsherum" in dem Ring umläuft. Wenn der Ringlaser eine Drehbewegung um eine zur Ebene des Ringes senkrechte Achse ausführt, dann wird infolge des Sagnac-Effektes die optische Weglänge des Resonanzhohlraumes für das linksherum laufende Licht verschieden von der optischen Weglänge für das rechtsherum laufende Licht. Das führt zu Unterschieden in der Frequenz des Laserlichts. Aus der Differenz der Frequenzen des linksherum und des rechtsherum laufenden Lichtes kann die Drehrate bestimmt werden. Das funktioniert jedoch nicht im Bereich geringer Drehraten. Dann sind die optischen Weglängen nur geringfügig unterschiedlich. Durch unvermeidliche Rückstreuung des Lichtes kommt es dann zu einem "Einrasten" des Ringlasers auf eine Frequenz. Erst wenn eine gewisse Schwelle der Drehrate überschritten ist, treten die unterschiedlichen Frequenzen des linksherum und rechtsherum laufenden Lichtes des Ringlasers in Erscheinung.

Es ist bekannt, diesen Einrasteffekt dadurch zu vermeiden, daß dem Ringlaser eine überlagerte, definierte Schwingbewegung erteilt wird. Man bezeichnet das als "Dither".

Zur Erzeugung des Dithers sind Dithermoduln bekannt, die einen Außenring und einen dazu konzentrischen Innenring aufweisen, der mit dem Außenring durch speichenartige, radiale Federn verbunden ist. Durch Dither-Antriebe wird eine Drehschwingbewegung des Innenringes gegenüber dem Außenring um eine Ditherachse erzeugt. Die Innen- und Außenringe der Dithermoduln haben rechteckigen Querschnitt. Dabei liegen die größeren Abmessungen der rechteckigen Querschnitte parallel zu der Ditherachse. Mit dem Innenring ist ein Ringlaserblock verbunden (DE-A-3 313 434). Die Außenringe sind in der Struktur gehaltert. Bei extremen Beschleunigungen tritt eine starke Trägheitskraft auf. Das kann zu einer Beschädigung der Dithermoduln führen.

Die US-A-4 425 040 beschreibt einen mit drei Ringlasern aufgebauten Sensorblock, bei welchem die drei Ringlaser um 120° gegeneinander winkelversetzt auf einem gewölbeartigen, im wesentlichen konischen, Träger montiert sind. Der Träger ist durch radiale Federn drehschwingbar gehalten. Ein Dither-Antrieb bewirkt eine Drehschwingbewegung aller drei Ringlaser um eine gemeinsame Ditherachse.

Der Erfindung liegt die Aufgabe zugrunde, eine einfache und betriebssichere Einrichtung zu schaffen, die im Ausgangszustand und während einer vorübergehende Phase extrem hoher Beschleunigung, z.B. während des Abschusses von Lenkmunition oder eines Flugkörpers, einen beweglichen Teil sicher arretiert und gegen die Trägheitskräfte abstützt, die aber nach Wegfall dieser Beschleunigung die Bewegung dieses Teils nicht mehr behindert.

Erfindungsgemäß wird diese Aufgabe dadurch gelöst, daß das bewegliche Teil durch einen bleibend verformbaren Anschlag gegen die Trägheitskräfte abgestützt ist.

Auf diese Weise wird das bewegliche Teil vor dem Auftreten der Beschleunigung durch den Anschlag arretiert und gehalten. Wenn vorübergehend eine hohe Beschleunigung auftritt und damit eine starke Trägheitskraft an dem Teil wirksam wird, verformt sich das Teil elastisch. Mit dieser elastischen Verformung wird auch der Anschlag verformt. Die Verformung des Anschlags ist dabei eine bleibende Verformung. Nach Wegfall der Beschleunigung kehrt das elastisch verformte Teil wieder in seinen Ausgangszustand zurück. Der Anschlag bleibt verformt. Dadurch ist das bewegliche Teil von dem Anschlag frei. Das Teil kann dann seine funktionsgemäßen Bewegungen senkrecht zu der Richtung der Beschleunigung ausführen. Diese Bewegungen können beispielsweise die Drehschwingbewegungen eines Dithermoduls sein.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

Ausführungsbeispiele der Erfindung sind nachstehend unter Bezugnahme auf die zugehörigen Zeichnungen näher erläutert.
- Fig. 1: ist ein Längsschnitt eines dreiachsigen Laserkreisels mit drei Ringlasern und Dithermitteln sowie der zugehörigen Elektronik.
- Fig. 2: zeigt einen Querschnitt des dreiachsigen Laserkreisels von Fig.1 mit einer Draufsicht auf den Träger der Ringlaser.
- Fig. 3: zeigt einen Querschnitt durch ein Dithermodul.
- Fig. 4: zeigt einen Längsschnitt des Dithermoduls von Fig.3.
- Fig. 5: ist ein Längsschnitt einer abgewandelten Ausführung eines dreiachsigen Laserkreisels.
- Fig. 6: zeigt einen Querschnitt des Laserkreisels von Fig.5 mit einer Draufsicht auf den Träger und die Ringlaser.
- Fig. 7: zeigt eine Draufsicht auf einen Ringlaser, der bei den Laserkreiseln von Fig.1 bis 6 benutzt wird.
- Fig. 8: zeigt eine Seitenansicht des Ringlasers von Fig.7.
- Fig. 9: ist eine schematisch-perspektivische Darstellung des von der Laserkreiselanordnung und den Innenringen der Dithermoduln gebildeten beweglichen Teils mit bleibend verformbaren Anschlägen.
- Fig. 10: ist eine perspektivische Darstellung eines Anschlags.
- Fig. 11: zeigt schematisch die Anlage der bleibend verformbaren Anschläge an dem beweglichen Teil.
- Fig. 12: zeigt in ähnlicher Darstellung wie Fig. 10 die Verformung des in Richtung der Beschleunigung liegenden Anschlags während des Auftretens einer extrem hohen Beschleunigung, bei welcher sich der bewegliche Teil, nämlich die Dithermoduln mit der Ringlaseranordnung unter dem Einfluß der Beschleunigung verformt.
- Fig. 13: zeigt die Verformung des entgegen der Richtung der Beschleunigung angeordneten Anschlags beim Zurückfedern des beweglichen Teils.
- Fig. 14: zeigt den Endzustand nach Wegfall der Beschleunigung und Abklingen der Schwingungen des beweglichen Teils, wobei sich das bewegliche Teil "freigearbeitet" hat und in der Ebene senkrecht zu der Richtung der Beschleunigung ungestört von den Anschlägen beweglich ist.

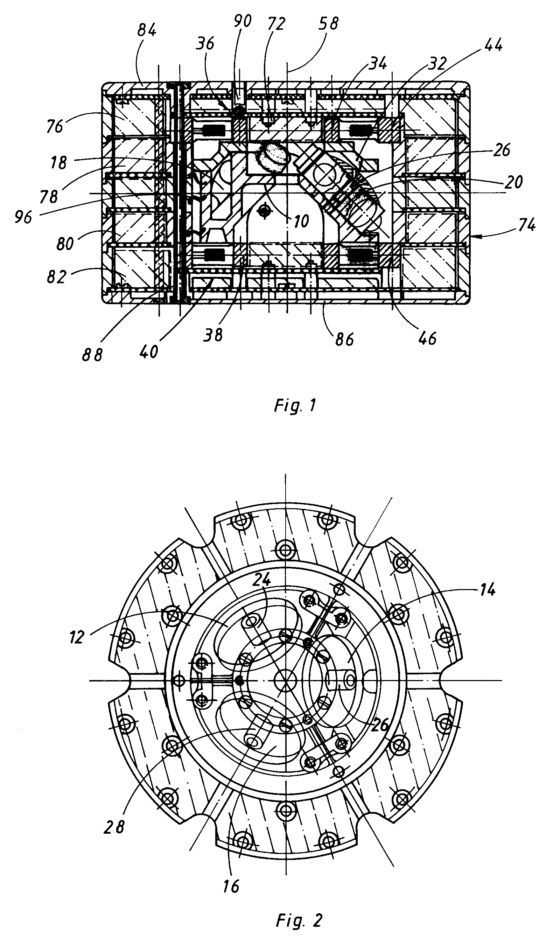

In Fig. 1 ist mit 10 ein gewölbeartiger Träger bezeichnet. Der Träger 10 weist auf seiner Außenfläche Ausnehmungen 12, 14 und 16 zur Aufnahme von drei Ringlasern 18, 20 und 22 auf. Die Ausnehmungen sind flach und kreisförmig und im wesentlichen komplementär zu den Ringlasern 18, 20 und 22. Von den Ringlasern 18, 20 und 22 sind in Fig. 1 nur die Ringlaser 18 und 20 sichtbar. Die Ringlaser 18, 20 und 22 sind mit dem Träger 10 verklebt. Zentral in den Ausnehmungen 12, 14 und 16 sitzen Zapfen 24, 26 und 28.

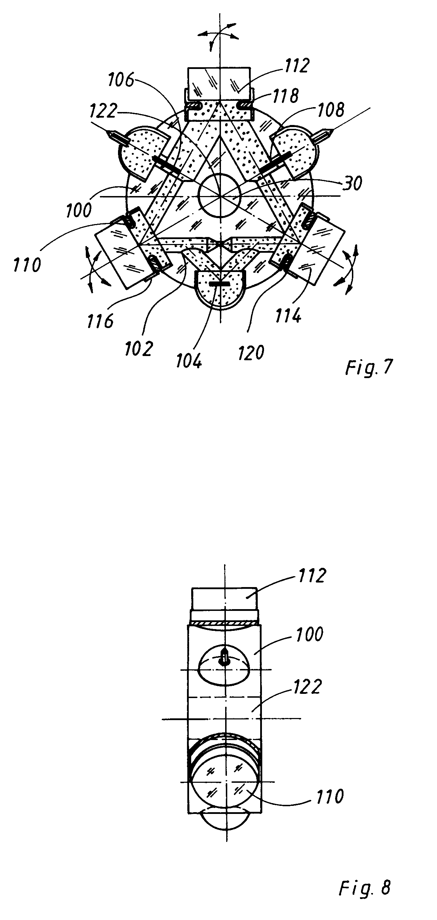

Die Zapfen greifen in zentrale Durchbrüche 30 (Fig.7) der Ringlaser 18, 20 bzw. 22 ein. Auf dem Träger 10 und den Ringlasern 18, 20 und 22 sitzt ein Deckelteil 32, der mit dem Träger 10 verbunden ist.

Der Träger 10 ist oben in Fig. 1 geschlossen und nach unten hin offen. Mit dem geschlossenen Bereich des Trägers 10 und Deckelteils 32 ist ein drehbeweglicher Innenring 34 eines "oberen" Dithermoduls 36 verbunden. Mit dem "unteren" Rand am offenen Ende des Trägers 10 ist der Träger 10 mit einem Innenring 38 eines "unteren" Dithermoduls 40 verbunden.

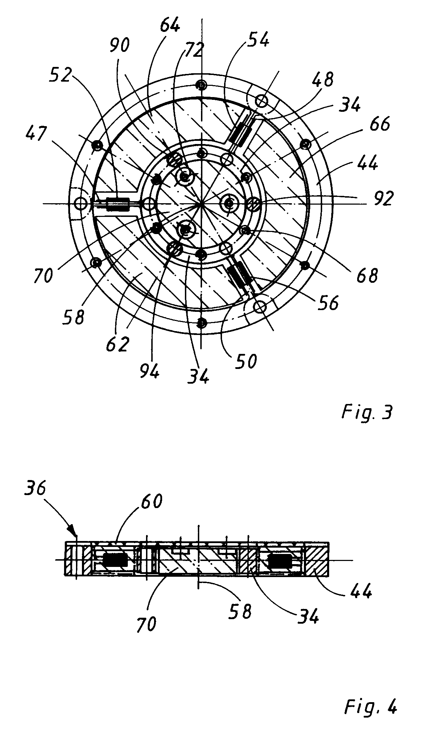

Die Dithermoduln 36 und 40 weisen je einen Außenring 44 bzw. 46 und einen Innenring 34 bzw. 38 auf. Wie aus Fig.3 für das obere Dithermodul 36 dargestellt ist, sind Außenring 44 und Innenring 34 durch radiale Federn 47, 48 und 50 miteinander verbunden. Die drei Federn 47, 48 und 50 sind jeweils um 120° gegeneinander winkelversetzt. Der Außenring 44 ist im Gehäuse gehalten. Der Innenring 34 ist schwingbeweglich. An den Federn 47, 48 und 50 greifen Dither-Antriebe 52, 54 bzw. 56 an. Die Dither-Antriebe 52, 54 und 56 sind bekannte Piezoantriebe.

Durch die beiden Dithermoduln 36 und 40 wird eine Ditherachse 58 bestimmt. Der Träger 10 schwingt um diese Ditherachse 58. Die Ringlaser 18, 20 und 22 sind um 120° um diese einzige Ditherachse 58 winkelversetzt. Die Eingangsachsen der Ringlaser 18, 20 und 22, die senkrecht zur Ebene der Ringlaser, also in Fig.1 schräg nach oben und nach außen verlaufen bilden mit der einzigen Ditherachse 58 gleiche spitze Winkel von etwa 45°.

Das "obere" Dithermodul 36 ist in Fig.3 und 4 einzeln dargestellt. Mit dem Außenring 44 des Dithermoduls 36 ist auf der dem Träger 10 abgewandten Seite ein Deckel 60 verbunden. Der Deckel 60 erstreckt sich über den Innenring 34 und auch über den Bereich innerhalb des Innenringes 34. Der Deckel 60 gestattet aber die Drehschwingbewegung (Ditherbewegung) des Innenringes. An dieser Struktur sind vergossene Leiterplattenmoduln befestigt, welche die Elektronik des Dithermoduls 36 darstellen. Es sind drei ringsektorförmige Leiterplattenmoduln 62, 64 und 66 zwischen Innen- und Außenring 34 bzw. 44 und zwischen den radialen Federn 47, 48 und 50 angeordnet. Diese Leiterplattenmoduln 62, 64 und 66 sind durch Schrauben 68 an dem Innenring 34 angebracht. Ein drittes, in Draufsicht kreisförmiges Leiterplattenmodul 70 sitzt innerhalb des Innenringes 34 und ist durch Schrauben 72 an dem Deckel 60 angebracht. Die Beweglichkeit des Innenringes 34 und der Federn 47, 48 und 50 wird durch diese vergossenen Leiterplattenmoduln 62 bis 68 nicht beeinträchtigt.

Die Innenringe 34 und 38 und die Außenringe 44 und 46 haben vorzugsweise rechteckigen Querschnitt, wobei die langen Seiten der Querschnitte parallel zu der Ditherachse 58 verlaufen. Dadurch ergibt sich eine erhöhte Stabilität der Dithermoduln 36 und 40 gegen Beschleunigungen parallel zur Ditherachse 58.

Das Dithermodul 40 ist spiegelbildlich zu dem Dithermodul 36 im wesentlichen in gleicher Weise aufgebaut wie dieses.

Der Träger 10 mit den Ringlasern 18. 20 und 22 und die Dithermoduln 36 und 40 sind von einem zylindrischen Gehäuse 74 umgeben. Bei der Ausführung von Fig.1 und 2 ist das Gehäuse von ringförmigen, vergossenen Leiterplattenmoduln 76, 78, 80 und 82 gebildet, welche die Elektronik der Ringlaser und die Signalauswertung enthalten. Die Leiterplattenmoduln sind zur Bildung des zylindrischen Gehäuses 74 aufeinandergesetzt und miteinander verbunden. Das Gehäuse 74 ist an seinen beiden Stirnseiten durch je einen Deckel 84 bzw. 86 abgeschlossen. Die Außenringe 44 und 46 der Dithermoduln 36 bzw. 40 sind in drei um 120° gegeneinander winkelversetzten Punkten mittels durch die Deckel 84 und 86 und die Leiterplattenmoduln 76, 78, 80 und 82 hindurchgehender Bolzen 88 mit dem benachbarten Deckel 84 bzw. 86 verbunden und werden so undrehbar in dem Gehäuse 74 gehalten. An den Deckeln 84 und 88 sind weiterhin um 120° gegeneinander versetzt axiale Anschläge 90, 92 und 94 angebracht, an denen die Innenringe 34 und 38 der Dithermoduln 36 bzw. 40 zur Anlage kommen, wenn die Federn 47, 48 und 50 sich unter dem Einfluß hoher axialer Beschleunigungen verformen. Die Anschläge 90, 92 und 94 ragen durch Durchbrüche in den Deckelteilen 60 der Dithermoduln 36 und 40 hindurch. Die Anschläge sind bleibend verformbar. In dem dargestellten Ausführungsbeispiel bestehen die Anschläge aus Rohrstücken, die an ihren Enden Bleikugeln tragen. Bei dem Auftreten der hohen Beschleunigungen, wie sie etwa beim Abschuß lenkbarer Munition oder beim Abschuß eines rückstoßgetriebenen Flugkörpers auftreten, werden die Bleikugeln verformt und in die Rohrstücke hineingedrückt. Nach dem Wegfall der Beschleunigung ist dann der Innenring 34 frei beweglich. Die Anschläge 90, 92 und 94 verhindern somit eine Beschädigung der Dithermoduln durch die hohen Beschleunigungen, beeinträchtigen aber deren Funktion mach Wegfall der Beschleunigung infolge der bleibenden Verformung der Anschläge nicht mehr.

Der elektrische Anschluß der Leiterplattenmoduln 76, 78, 80 und 82 erfolgt über integrierte Steckverbindungen. Der Anschluß der Ringlaser 18, 20 und 22 und der mit dem Träger 10 über die Innenringe 34 bzw. 38 verbundenen Leiterplattenmoduln 62, 64 und 68 der Dithermoduln 36 und 40 sind mit dem Gehäuse 74 über Flexverbindungen 96 verbunden.

Die Signale der drei Ringlaser liefern Drehraten um die drei Eingangsachsen. Aus den so erhaltenen Drehraten können nach einfachen trigonometrischen Beziehungen durch einen Rechner die Drehraten um drei orthogonale Koordinatenachsen berechnet werden. Die Ditherbewegung um die Ditherachse 58 hat drei gleiche Komponenten in Richtung der Eingangsachsen der drei Ringlaser 18, 20 und 22.

Es ergibt sich auf diese Weise eine sehr kompakte und einfache Anordnung mit Dithermitteln 36, 40 für nur eine Achse. Die Anordnung ist unempfindlich gegen Beschleunigungen in Richtung der Ditherachse 58. Die Innen- und Außenringe der Dithermoduln 36 und 40 sind in dieser Richtung, die parallel zu den längeren Seiten des Rechteckquerschnitts verläuft, sehr biegesteif.

Ein Ringlaser der hier benutzten Art, der in Fig. 1 mit 18 oder 20 bezeichnet ist, ist in Fig.7 und 8 im einzelnen dargestellt. Es handelt sich dabei um einen Helium-Neon-Ringlaser. Ein solcher Helium-Neon-Ringlaser ist Gegenstand der (nicht vorveröffentlichten) deutschen Patentanmeldung P 40 17 188.4.

Der Ringlaser 18 weist einen flach-zylindrischen Keramikblock 100 mit einem in sich geschlossenen, längs der Seiten eines gleichseitigen Dreiecks verlaufenden, gasgefüllten Kanal 102 auf, der einen Resonanzhohlraum bildet. Eine Anode 104 und Kathoden 106 und 108 gestatten die Erzeugung zweier Gasentladungen. Durch dielektrische Spiegel 110, 112 und 114 können zwei Lichtbündel mit entgegengesetztem Umlaufsinn in dem Kanal 102 geführt werden.

Zur leichteren Herstellung besteht der Keramikblock 100 aus einer Glaskeramik, die aus einem Grünkeramikkörper durch Sintern hergestellt ist. Die Spiegel 110, 112 und 114 sind in metallischen Justierfassungen 116, 118 bzw. 120 mit Glaslot in den Keramikblock 100 eingelötet. Der Keramikblock 100 weist eine zentrale Bohrung 122 auf. Mit der zentralen Bohrung 122 ist der Keramikblock 100 auf dem Zapfen 24 des Trägers 10 zentriert.

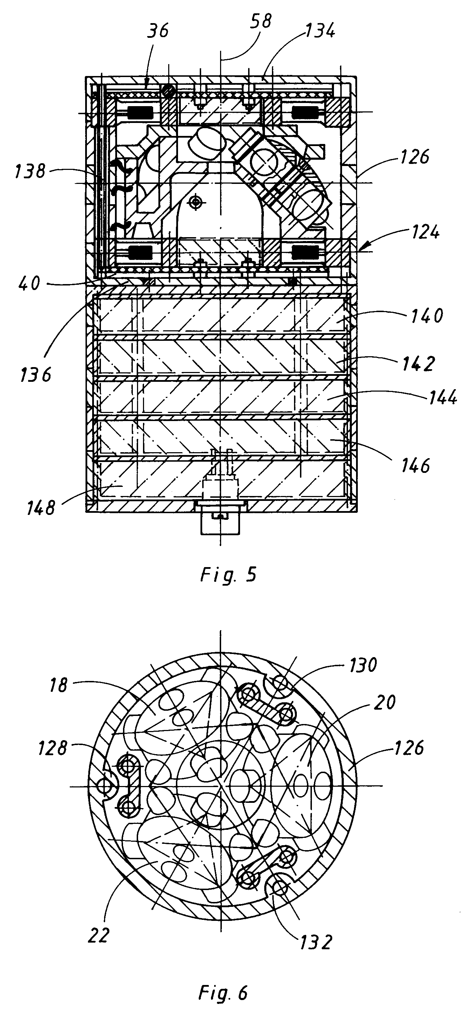

Die Anordnung von Fig.5 und 6 ist ähnlich aufgebaut wie die Anordnung von Fig.1 und 2. Entsprechende Teile sind mit den gleichen Bezugszeichen gekennzeichnet wie dort. Das Gehäuse 124 ist dort nicht von ringförmigen Leiterplattenmoduln gebildet sondern weist einen einfachen zylindrischen Mantelteil 126 mit drei um 120° gegeneinander winkelversetzten, inneren Längsrippen 128, 130 und 132 auf. Die Längsrippen erstrecken sich nicht über die gesamte Höhe des Mantelteils 126. "Oben" und "unten" sitzen in dem Mantelteil 126 die Dithermoduln 36 und 40. An den Stirnseiten ist das Gehäuse von Deckeln 134 und 136 abgeschlossen. Die Dithermoduln 36 und 40 liegen an den Stirnflächen der Längsrippen 128, 130 und 132 an. Die Dithermoduln werden durch Bolzen 138 gehalten, die durch Bohrungen der Dithermoduln und der Längsrippen hindurchgeführt sind.

Bei der Anordnung von Fig.5 und 6 sind die Leiterplattenmoduln 140, 142, 144, 146 und 148 in einem gesonderten Paket an das Gehäuse 124 angesetzt.

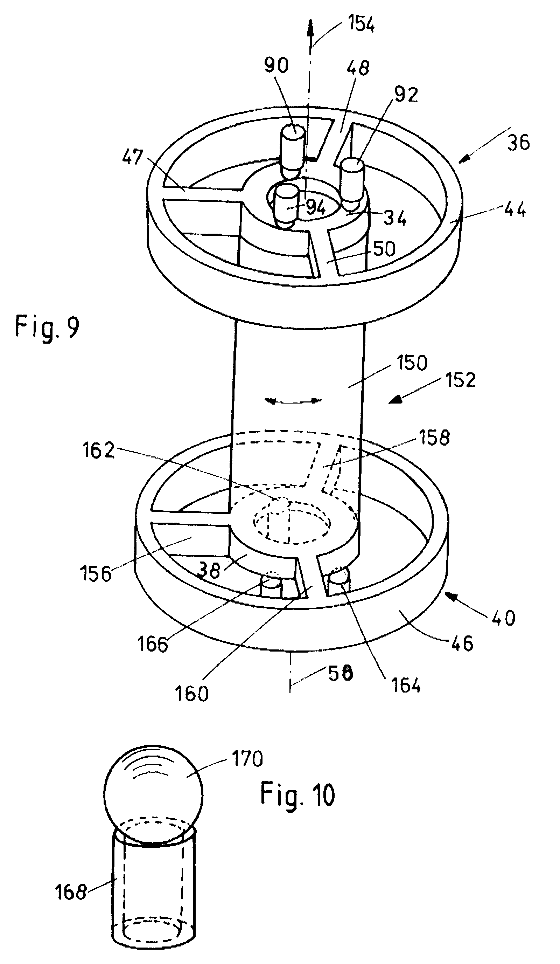

Fig.9 ist eine schematisch-perspektivische Darstellung und veranschaulicht die Wirkungsweise der bleibend verformbaren Anschläge. Die Ringlaseranordnung mit dem Träger 10 und den drei Ringlasern 18,20 und 22 ist in Fig.9 durch einen zylindrischen Block 150 dargestellt. Der Block 150 ist mit den Innenringen 34 und 38 der Dithermoduln 36 bzw. 40 verbunden. Der Block 150 und die Dithermoduln 36 und 40 bilden ein "bewegliches Teil" 152, der sich unter dem Einfluß einer in Richtung der Ditherachse 58 wirkenden Beschleunigung, die durch einen Pfeil 154 dargestellt ist, elastisch verformt. Die elastische Verformung besteht hier im wesentlichen in einer Durchbiegung der Federn 47, 48 und 50 des Dithermoduls 36 und der Federn 156, 158 und 160 des Dithermoduls 40.

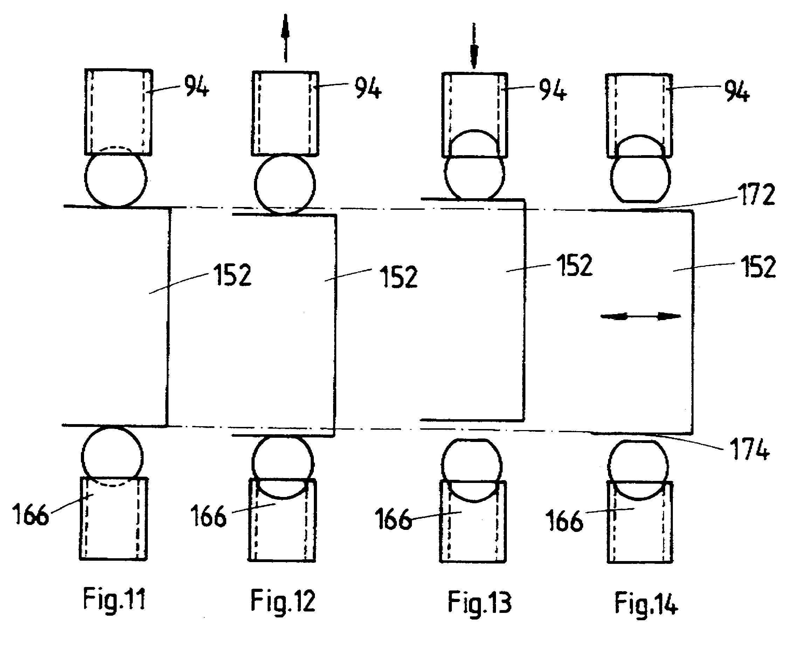

Das bewegliche Teil 152 ist in Richtung der zu erwartenden hohen Beschleunigung durch drei um 120° gegeneinander winkelversetzte Anschläge 162, 164 und 166 abgestützt. Die Anschläge 162, 164 und 166 liegen an dem Innenring 38 des Dithermoduls 40 an und sind an dem Deckel 84 (Fig.1) befestigt. Die drei Anschläge 90, 92 und 94 stützen das bewegliche Teil 152 entgegen der Richtung der zu erwartenden, hohen Beschleunigung ab, also von oben in Fig.1 und 9. Die Anschläge 90, 92 und 94 liegen an dem Innenring 34 des Dithermoduls 36 an. Die Anschläge halten den beweglichen Teil 152 im Ausgangszustand in einer definierten axialen Lage. Das ist auch in Fig.11 dargestellt. Durch das Anliegen der Anschläge 90, 92, 94 und 162, 164, 166 ist jedoch die Bewegung des beweglichen Teils beeinträchtigt. Das Teil 152 kann seine Drehschwingbewegung nicht ausführen.

Jeder der Anschläge besteht aus einem Rohrstück 168 (Fig.10) in dem eine Kugel 170 aus bleibend verformbarem Material wie Blei sitzt. Die Kugel 170 liegt an dem Teil 152, mämlich an den Innenringen 34 bzw. 38, an.

Bei Auftreten einer hohen Beschleunigung nach oben in Fig.1 und 9, wird der Block 150 mit dem Innenring 38 durch die Trägheitskraft nach unten gedrückt. Dabei werden die Federn 47, 48, 50 und 156, 158, 160 elastisch verformt. Dabei kann, wie in Fig.12 dargestellt ist, die Kugel 170 des Anschlags 166 oben etwas abgeplattet und unten in das Rohrstück 168 hineingedrückt werden. Diese Verformung ist bleibend. Sie bleibt auch bestehen, wenn die extrem hohe Beschleunigung wieder wegfällt und sich das Teil 152 wieder nach oben zurückbewegt. Das elastisch verformbare Teil 152 mit seiner Masse bildet ein schwingungsfähiges System. Nach Wegfall der Beschleunigung federt das Teil nicht nur in seine Ausgangslage zurück sondern es schwingt über die Ausgangslage hinaus. Das ist in Fig.13 dargestellt. Dabei werden nun, wie in Fig.13 angedeutet, auch die Anschläge z.B. 94 auf der gegenüberliegenden Seite bleibend verformt. Wenn die Schwingung abgeklungen ist, dann hat sich das bewegliche Teil 152 "freigearbeitet". Es sind zu beiden Seiten Spalte zwischen dem Teil 152 und den Anschlägen 90, 92, 94 bzw. 162, 164, 166. Die Dithermodule 36 und 40 können eine Drehschwingbewegung des Blocks 150 mit den Innenringen 34 und 38 erzeugen.

## Patentansprüche

1. Gerät mit einem beweglichen Teil (152), das vorübergehend hoher Beschleunigung ausgesetzt ist, wobei das bewegliche Teil (152) unter dem Einfluß der auftretenden Beschleunigungskräfte elastisch verformbar ist, **dadurch gekennzeichnet, daß** das bewegliche Teil (152) durch einen bleibend verformbaren Anschlag (162,164,166)) gegen die Trägheitskräfte abgestützt ist.

2. Gerät nach Anspruch 1, **dadurch gekennzeichnet, daß** das bewegliche Teil (152) durch mindestens je einen bleibend verformbaren Anschlag (90,92,94;162,164,166) in Richtung und entgegen der Richtung einer zu erwartenden hohen Beschleunigung abgestützt ist.

3. Gerät nach Anspruch 1 oder 2, **dadurch gekennzeichnet, daß** die Anschläge (90,92,94;162,164,166) Haltekörper (170) aus einem bleibend verformbaren Material aufweisen.

4. Gerät nach Anspruch 3, **dadurch gekennzeichnet, daß** die Anschläge (90,92,94;162,164,166) von Rohrstücken (168) gebildet sind, die sich parallel zur Richtung der Beschleunigung erstrecken und in ihrem dem beweglichen Teil (152) zugewandten Ende den Haltekörper (70) aus dem bleibend verformbaren Material aufnehmen, der von dem Teil (152) unter dem Einfluß der Beschleunigung verformt und wenigstens teilweise in das Rohrstück (168) hineingedrückt wird.

5. Gerät nach Anspruch 4, **dadurch gekennzeichnet, daß** der Haltekörper (170) eine Kugel ist.

6. Gerät nach Anspruch 4 oder 5, **dadurch gekennzeichnet, daß** das verformbare Material des Haltekörpers (170) Blei ist.

7. Gerät nach einem der Ansprüche 1 bis 6, **dadurch gekennzeichnet, daß**
(a) das Gerät eine Laserkreiselanordnung mit wenigstens einem Dithermodul (36,40) ist,
(b) das Dithermodul (36,40) einen Außenring (44,46) und einen dazu konzentrischen Innenring (34,38) aufweist, der mit dem Außenring (44,46) durch speichenartige, radiale Federn (47,48,50;156,158,160) verbunden ist, sowie einen Dither-Antrieb (52,54,56), durch welche eine Drehschwingbewegung des Innenringes (34,38) gegenüber dem Außenring (44,46) erzeugbar ist, wobei der Innenring (34,38) des Dithermoduls (36,40) durch die Anschläge (90,92,92;162,164,166) abgestützt ist.

8. Gerät nach Anspruch 7, **dadurch gekennzeichnet, daß**
(a) die Laserkreiselanordnung drei Ringlaser (18,20,22) aufweist, die auf einem gewölbeartigen Träger (10) um eine einzige Ditherachse (58) um 120° gegeneinander winkelversetzt angeordnet sind, wobei die Eingangsachsen der Ringlaser (18,20,22) mit der Ditherachse (58) gleiche spitze Winkel bilden,
(b) der Träger (10) von zwei Dithermoduln (36,40) zu Schwingbewegungen um die Ditherachse (58) anregbar ist,
(c) der Innenring (34) des einen Dithermoduls (36) mit dem geschlossenen Ende des gewölbeartigen Trägers (10) verbunden ist,
(d) der Innenring (38) des anderen Dithermoduls (40) mit dem Rand des gewölbeartigen Trägers (10) verbunden ist und
(e) Anschläge für beide Innenringe (34,38) der beiden Dithermoduln (36,40) parallel zu der Ditherachse vorgesehen sind.

9. Gerät nach Anspruch 8, **dadurch gekennzeichnet, daß** die Innen- und Außenringe (34,38 bzw. 44,46) der Dithermoduln (36,40) rechteckigen Querschnitt aufweisen, wobei die größeren Abmessungen der rechteckigen Querschnitte parallel zu der Ditherachse (58) liegen.

10. Gerät nach Anspruch 9, **dadurch gekennzeichnet, daß** die Dithermoduln (36,40) je einen Deckel (60) aufweisen, der auf der dem Träger (10) abgewandten Seite mit dem Außenring (44,46) verbunden ist.

11. Gerät nach Anspruch 10, **dadurch gekennzeichnet, daß** an dem Deckel (60) innerhalb des Innenringes (34,38) integrierte Komponenten (70) der Ditherelektronik angebracht sind.

12. Gerät nach einem der Ansprüche 8 bis 11, **dadurch gekennzeichnet, daß** der Träger (10) auf seiner Außenfläche Ausnehmungen (12,14,16) aufweist, die im wesentlichen komplementär zu den Außenkonturen der Ringlaser (18,20,22) sind und in welche die Ringlaser (18,20,22) eingesetzt sind.

13. Gerät nach Anspruch 12, **dadurch gekennzeichnet, daß** die Ringlaser (18,20,22) mit dem Träger (10) verklebt sind.

14. Gerät nach Anspruch 12 oder 13, **dadurch gekennzeichnet, daß** ein Deckelteil (32) auf den Träger (10) und die darauf angebrachten Ringlaser (18,20,22) aufgesetzt und mit dem Träger (10) und dem Innenring (34) des einen Dithermoduls (36) verbunden ist.

15. Gerät nach einem der Ansprüche 8 bis 14, **dadurch gekennzeichnet, daß**
(a) der Träger (10) von einem zylindrischen Gehäuse (74) umgeben ist, dessen Gehäuseachse mit der Ditherachse (58) zusammenfällt und das an seinen Stirnseiten durch je einen Gehäusedeckel (84,86) abgeschlossen ist,
(b) die Außenringe (44,46) der Dithermoduln (36,40) an den Gehäusedeckeln (84,86) angebracht sind und
(c) wenigstens an dem einen Deckel (84) axiale Anschläge (90,92,94;162,164,166) für den Innenring (34,38) des benachbarten Dithermoduls (36,40) vorgesehen sind.

16. Gerät nach Anspruch 15, **dadurch gekennzeichnet, daß** das Gehäuse von ringförmigen, vergossenen Leiterplattenmoduln (76,78,80,82) gebildet ist, welche die Elektronik der Ringlaser (18,20,22) und die Signalauswertung enthalten.
